# EUROPÄISCHE PATENTSCHRIFT

(11) **EP 3 779 259 B1**
(45) Veröffentlichungstag und Bekanntmachung des Hinweises auf die Patenterteilung: **17.05.2023**
(21) Anmeldenummer: 20187899.8
(22) Anmeldetag: 27.07.2020
(51) Int. Cl.: F16L 41/08, F16L 41/18, E03F 3/04, E03F 5/02

(54) **ANSCHLUSSSTÜCK ZUM ANSCHLUSS EINES KUNSTSTOFFROHRS AN EIN MINERALISCHES KANALROHR**
CONNECTOR FOR CONNECTING A PLASTIC PIPE TO A MINERAL CHANNEL PIPE
PIÈCE DE RACCORDEMENT PERMETTANT DE RACCORDER UN TUYAU EN MATIÈRE PLASTIQUE À UNE CANALISATION MINÉRALE

(30) Priorität: 16.08.2019 DE 202019104525 U
(43) Veröffentlichungstag der Anmeldung: 17.02.2021
(73) Patentinhaber: Funke Kunststoffe GmbH, 59071 Hamm-Uentrop (DE)
(72) Erfinder: Funke, Norbert, 48324 Sendenhorst (DE); Funke, Hans-Günter, 48324 Sendenhorst (DE)
(74) Vertreter: Habbel, Ludwig

(56) Entgegenhaltungen:
- EP-A1- 1 319 451
- WO-A1-97/36128
- DE-U1- 29 718 570
- DE-U1- 29 800 496
- DE-U1-202017 101 503
- DE-U1-202019 100 076
- GB-A- 983 352

## Beschreibung

Die Erfindung betrifft ein Anschlussstück nach dem Oberbegriff des Anspruchs 1.

Ein gattungsgemäßes Anschlussstück ist aus der WO 97/36128 A1 oder der DE 196 11 682 C1 bekannt. Es ermöglicht den Anschluss zum Beispiel einer Hauskanalisation, unter Verwendung von Kunststoffrohren mit einem Durchmesser von 200 mm, an die öffentliche Kanalisation, die typischerweise mineralische Kanalrohre aufweist, beispielsweise aus Steingut und insbesondere häufig aus Beton. Hierzu wird eine seitliche Bohrung in das Kanalrohr eingebracht. Als "seitlich" wird in diesem Zusammenhang eine Bohrung bezeichnet, die abweichend von der Längsachse des Kanalrohrs in die Wand des Kanalrohrs eingebracht wird. Im Idealfall wird die Bohrung exakt radial in das Kanalrohr eingebracht, und typischerweise in der oberen Umfangshälfte des Kanalrohrs. Der Begriff "seitlich" kann also auch eine Bohrung bezeichnen, die exakt senkrecht von oben in das Kanalrohr eingebracht ist.

Ein Dichtungsabschnitt des Anschlussstücks wird in die Bohrung eingeführt. Entweder schließt dieser Dichtungsabschnitt auf der Innenseite des Kanalrohrs bündig mit der inneren Oberfläche des Kanalrohrs ab, häufig jedoch erstreckt sich der Dichtungsabschnitt nicht ganz bis an die innere Oberfläche des Kanalrohrs. So wird auf jeden Fall ein hinderlicher Überstand im Inneren des Kanalrohrs vermieden. Um die Eindringtiefe des Dichtungsabschnittes in die Bohrung zu begrenzen, verläuft außen um das Anschlussstück umlaufend ein Anlagekragen, mit dem das Anschlussstück auf die Außenseite des Betonrohrs aufgesetzt wird. Dementsprechend verläuft der Anlagekragen in einer Wellenform außen um den Rohrstutzen, da der Anlagekragen an die äußere Krümmung des Kanalrohrs angepasst ist.

Zusätzlich zu dem Dichtungsring ist eine zweite Dichtung vorgesehen, die als Flüssigdichtung, nämlich unter Verwendung einer fließfähigen Dichtungsmasse ausgestaltet ist. Hierzu weist der Dichtungsabschnitt zwischen der Dichtungskammer, in welcher der Dichtungsring angeordnet ist und dem Anlagekragen eine Füllkammer auf, in welche die fließfähige Dichtungsmasse eingefüllt werden kann. Zur Befüllung der Füllkammer ist ein Füllkanal vorgesehen, der mit einem Ende in der Füllkammer mündet, ein anderes Ende des Füllkanals mündet jenseits des Anlagekragens, also außerhalb des Dichtungsabschnitts, an der Außenseite des Anschlussstücks, sodass von dort die Dichtungsmasse injiziert werden kann, nachdem das Anschlussstück mit seinem Dichtungsabschnitt in die Bohrung des Kanalrohrs eingesetzt worden ist.

Auch aus den Druckschriften DE 20 2019 100 076 U1, DE 20 2017 101 503 U1 und DE 298 00 496 U1 sind Anschlussstücke bekannt, die es ermöglichen, ein fließfähiges Dichtungsmaterial in einen Hohlraum einzufüllen, um zusätzlich zu einem Dichtungsring eine zweite Dichtung in Form einer Flüssigdichtung zu schaffen.

Der Erfindung liegt die Aufgabe zugrunde, ein gattungsgemäßes Anschlussstück dahingehend zu verbessern, dass dieses eine besonders zuverlässige Abdichtung gegenüber dem Kanalrohr ermöglicht.

Diese Aufgabe wird durch ein Anschlussstück nach Anspruch 1 gelöst. Vorteilhafte Ausgestaltungen sind in den Unteransprüchen beschrieben.

Die Erfindung schlägt mit anderen Worten Mittel vor, die das Anschlussstück in seiner in die Bohrung des Kanalrohrs eingedrückten Stellung sichern. In diesem Zusammenhang geht die Erfindung von der Überlegung aus, dass die Elastomerdichtung Rückstellkräfte aufweist, die bestrebt sind, den zunächst in die Bohrung des Kanalrohrs eingesteckten Dichtungsabschnitt wieder aus der Bohrung herauszudrücken, beispielsweise über einen Weg von wenigen Millimetern. Durch diese Rückwärtsbewegung würde der umlaufende Anlagekragen von der Oberfläche des Kanalrohrs entfernt. Eine Anlage des Anlagekragens am Kanalrohr ist jedoch wünschenswert, um den Austritt der fließfähigen Dichtungsmasse zu verhindern.

Aus diesem Grund sind in der Füllkammer zwei Federelemente angeordnet, und insbesondere können vorteilhaft mehr als zwei Federelemente vorgesehen sein, wobei die Federelemente widerhakenartig ausgerichtet sind, sodass sie beim Einführen des Dichtungsabschnitts in die Bohrung des Kanalrohrs zunächst komprimiert werden, beispielsweise indem die Federelemente im Querschnitt V-förmig ausgestaltet sind bzw. einen V-förmigen Abschnitt aufweisen und mit der Spitze voran in die Bohrung des Kanalrohrs eingeführt werden. Wenn diese Einsteckbewegung beendet ist und aufgrund der Rückstellkräfte der Elastomerdichtung anschließend eine Bewegung in Gegenrichtung beginnt, werden die widerhakenartigen Abschnitte bzw. Federelemente automatisch gespreizt und verkrallen sich in dem Kanalrohr, sodass eine weitere Bewegung in dieser Gegenrichtung erschwert oder ausgeschlossen wird.

Auf diese Weise wird das Anschlussstück und insbesondere sein Dichtungsabschnitt mittels der Federelemente in der gewünschten, möglichst weit in die Bohrung des Kanalrohrs eingesteckten Position gehalten, sodass den Rückstellkräften der Elastomerdichtung entgegengewirkt wird. Auch wenn anschließend die Dichtungsmasse in die Füllkammer injiziert wird und sich in der Füllkammer ein dementsprechender Druck aufbaut, der bestrebt ist, den Dichtungsabschnitt aus der Bohrung herauszubewegen, sichern die Federelemente die Position des Dichtungsabschnitts in der Bohrung, bis die Dichtungsmasse abgebunden ist. Über diese vorteilhafte, vergleichsweise kurzfristige Wirksamkeit der Federelemente während der Montage des Anschlussstücks hinausgehend wirken die Federelemente auch langfristig: Der oben bereits angesprochenen unerwünschten Herauslösung des Anschlussstücks aus der Bohrung des Haupt- bzw. Kanalrohrs wird nicht nur durch eine klebende Wirkung der Dichtmasse entgegengewirkt, sondern insbesondere auch durch die mechanische Verkrallung des Anschlussstücks im Kanalrohr mittels der Federelemente.

Die Federelemente können beispielsweise als metallische Federkrallen ausgestaltet sein, sie können jedoch auch einteilig an den Dichtungsabschnitt des Anschlussstücks angespritzt sein, wenn beispielsweise das Anschlussstück bzw. dessen Dichtungsabschnitt als Spritzgussteil aus Kunststoff ausgestaltet ist.

Durch die Verwendung einer fließfähigen Dichtungsmasse wird eine optimale Anlage der Flüssigdichtung an die Kanalrohrwand in der Bohrung sichergestellt. Zum Inneren des Kanalrohrs hin bewirkt die Elastomerdichtung des Anschlussstücks eine Begrenzung der Füllkammer und verhindert den Austritt der fließfähigen Dichtungsmasse. Nach außen hin verhindert der Anlagenkragen, dass die in die Füllkammer injizierte Dichtungsmasse austritt, sodass die gewünschte vollständige Ausfüllung der Füllkammer mit Dichtungsmasse und damit eine optimal dichte Anlage der Dichtungsmasse am Material des Kanalrohrs gewährleistet werden kann. Dabei ist zu berücksichtigen, dass die Dichtungsmasse mit einer entsprechenden Viskosität eingestellt ist und nicht so dünnflüssig wie Wasser eingestellt ist, sodass geringfügige Spalten, die zwischen dem Anschlussstück und dem Kanalrohr verbleiben, zwar zu einer Entlüftung führen und somit eine vollständige Befüllung der Füllkammer ermöglichen aufgrund der Viskosität der Dichtungsmasse jedoch nicht zu einem Verlust an Dichtungsmasse führen.

Je nach Ausgestaltung der Dichtungsmasse als einkomponentiges oder als zweikomponentiges Material kann die Abbindezeit innerhalb einer kurzen, überschaubaren Zeitspanne von beispielsweise 10 bis 30 Minuten eingestellt werden, sodass die erwähnten Spalten nicht zu einem unerwünschten Verlust an Dichtungsmasse führen, insbesondere da die Viskosität der Dichtungsmasse während des Abbindevorgangs ja stetig zunimmt. Um eine problemlose Verarbeitbarkeit sicherzustellen und eine unerwünschte vorzeitige Abbindung zu vermeiden, kann die Abbindezeit auch bewusst länger als die erwähnten 10 bis 30 Min. eingestellt sein und beispielsweise 60 Min. betragen.

Durch Verwendung geeigneter Dichtungsmassen kann zudem ein Korrosionsschutz bewirkt werden für im Kanalrohr enthaltenen Bewährungsstahl, falls das Kanalrohr als Stahlbetonrohr ausgestaltet ist.

Je nach Ausgestaltung der Dichtungsmasse kann eine regelrechte Verklebung mit dem Kanalrohr erfolgen, sodass zusätzlich zu dem Aspekt der Abdichtung die Dichtungsmasse auch eine wirksame Sicherung gegen Kräfte darstellt, die das Anschlussstück aus dem Kanalrohr herauszuziehen bestrebt sind, sodass im Ergebnis das vorschlagsgemäß ausgestaltete Anschlussstück eine erheblich verbesserte Abdichtung im Vergleich dazu aufweist, die Abdichtung gegenüber dem Kanalrohr ausschließlich mit Hilfe elastomerer Dichtungsringe zu bewirken.

In der Praxis ist zu beobachten, dass das Erdreich im Bereich des angeschlossenen Rohres - z. B. eines Hausanschlussrohres - anders verdichtet wird als unterhalb des als Kanalrohr bezeichneten Hauptrohrs. Daher, und auch schon allein aufgrund der unterschiedlichen Nennweiten zwischen dem Hauptrohr (z.B. mit einem Durchmesser DN300 oder DN400) und dem angeschlossenen Rohr (z.B. mit einem Durchmesser DN150 oder DN200) setzt sich im Laufe der Zeit das angeschlossene Rohr anders als das Hauptrohr bzw. Kanalrohr. Dies gilt umso mehr, je horizontaler das angeschlossene Rohr an das Hauptrohr anschließt, z. B. insbesondere bei Anschlüssen in der so genannten "3-Uhr"- und "9-Uhr"-Position. Es entstehen, mindestens in den ersten 5 Jahren nach der Verlegung, unterschiedlich starke Setzungen im Erdreich.

Diese unterschiedlichen Setzungen bewirken erstens Scherkräfte, die auf den Anschlussstutzen einwirken. Je nach der Druckstabilität, welche die ausgehärtete bzw. abgebundene Dichtmasse erreicht, bietet die Dichtmasse eine gute Stützwirkung aufgrund ihrer großflächigen Verteilung in der Füllkammer, so dass eine Stauchung des elastomeren Dichtungsrings in seinem unteren Umfangsbereich begrenzt oder ganz verhindert werden kann und dementsprechend eine ungenügende Anlage des Dichtungsrings am Haupt- bzw. Kanalrohr in seinem oberen Umfangsbereich vermieden werden kann.

Zweitens können die unterschiedlichen Setzungen dazu führen, dass sich das Anschlussstück aus der Bohrung zu drehen bestrebt ist oder aus der Bohrung zu kippen bestrebt ist. Da die Dichtmasse typischerweise auch eine klebende Wirkung aufweist, wirkt sie dieser unerwünschten Herauslösung des Anschlussstücks aus der Bohrung entgegen.

Vorteilhaft kann in der Füllkammer eine Anzahl von Zentrier-Rippen am Umfang des Dichtungsabschnitts verteilt angeordnet sein. Durch derartige Zentrier-Rippen wird eine Schrägstellung des Anschlussstücks vermieden oder zumindest erheblich begrenzt, wenn das Anschlussstück in die Bohrung des Kanalrohrs eingesteckt worden ist. Dies dient einerseits der gewünschten lagerichtigen Ausrichtung des Anschlussstücks am Kanalrohr und sichert darüber hinaus eine gleichmäßige Verteilung der Dichtungsmasse in der Füllkammer, nämlich eine ringsum möglichst gleichmäßige Schichtdicke der Dichtungsmasse zwischen Kanalrohrwand und dem Rohrstutzen des Anschlussstücks.

Vorteilhaft kann der Anlagekragen mit einer Weichdichtung versehen sein, nämlich auf seiner zum Dichtungsabschnitt ausgerichteten Seite, also auf der Seite, mit welcher der Anlagekragen außen dem Kanalrohr anliegt. Diese Weichdichtung unterstützt die Dichtungswirkung, die der Anlagekragen außen am Kanalrohr entfalten soll und verhindert den Austritt der Dichtungsmasse zwischen Kanalrohr und Anlagekragen. Durch die Ausgestaltung dieser Dichtung als Weichdichtung wird eine Komprimierbarkeit dieser Dichtung gewährleistet, sodass beim Einschieben des Anschlussstücks in die Bohrung das Anschlussstück bis zu einer maximalen Eindringtiefe in die Bohrung eingebracht werden kann und dabei die Weichdichtung maximal komprimiert wird. Die anschließende Rückwärtsbewegung aufgrund der Rückstellkräfte des Elastomerdichtungsrings am Dichtungsabschnitt, zumindest so weit, bis die Federelemente eine solche Rückwärtsbewegung begrenzen, führt zu einer Entspannung der Weichdichtung am Anlagekragen, wobei aufgrund der Komprimierbarkeit dieser Weichdichtung nach wie vor die gewünschte dichte Anlage der Weichdichtung an der äußeren Oberfläche des Kanalrohrs sichergestellt ist.

Eine solche Weichdichtung kann beispielsweise als Moosgummidichtung ausgestaltet sein. Die weiche Ausgestaltung einer solchen Dichtung ermöglicht eine optimale Anpassung an die Kanalrohroberfläche und ermöglicht die wirtschaftliche Bereitstellung einer solchen Dichtung, da keine speziellen Dichtungsprofile verwendet zu werden brauchen, sondern der Dichtungswerkstoff als plattenförmiger Dichtungswerkstoff handelsüblich erhältlich ist und aus dem Plattenmaterial ausgeschnitten werden kann. Trotz der Porosität des Moosgummi-Werkstoffs wird eine gute Abdichtungswirkung sichergestellt und das Austreten der Dichtungsmasse unter dem Anlagekragen verhindert.

Vorteilhaft kann der Verbindungsabschnitt des Anschlussstücks eine Muffe zum Anschluss des Spitzendes eines Kunststoffrohrs aufweisen. Die Fließrichtung der Kunststoffrohrleitung zum Kanalrohr hin bedeutet, dass in vorteilhafter Weise in Fließrichtung der jeweilige Rohrabschnitt vorteilhaft mit einem Spitzende endet, welches in der Muffe des folgenden Rohrabschnitts aufgenommen wird und entsprechend dieser vorteilhaften Ausrichtung der einzelnen Rohrabschnitte schließt das Anschlussstück dann mit seiner Muffe an das entsprechende Spitzende der KunststoffRohrleitung an.

Die Muffe des Verbindungsabschnitts kann vorteilhaft als sogenannter Kugeladapter ausgestaltet sein, der an sich bekannt ist und ein äußeres Gehäuse aufweist, welches eine kugelausschnittsförmige Innenkontur aufweist. Darin ist ein Muffeneinsatz angeordnet, der mit einer umlaufenden Dichtung gegen die Innenkontur des Gehäuses abgedichtet ist und in Art einer Taumelbewegung innerhalb der Innenkontur frei in beliebigen Richtungen bewegt werden kann. Durch diese Beweglichkeit kann der Muffeneinsatz in unterschiedlichen Winkelstellungen ausgerichtet werden und Fehlstellungen ausgleichen, z. B. wenn die Rohrleitung des Hausanschlusses nicht exakt wie geplant an das Kanalrohr anschließt, oder wenn die Bohrung in das Kanalrohr nicht exakt in dem geplanten Winkel eingebracht worden ist.

Das vorschlagsgemäße Anschlussstück kann einen einteiligen, beispielsweise als Spritzgussteil ausgestalteten Rohrstutzen aufweisen. Der Rohrstutzen kann in einer vorteilhaften Ausgestaltung jedoch auch zweiteilig ausgestaltet sein, wobei ein erster Teil den Dichtungsabschnitt aufweist und der zweite Teil den Verbindungsabschnitt aufweist. Auf diese Weise kann im Sinne einer möglichst wirtschaftlichen Fertigung der unterschiedlichen Anschlussstücke modular aus wenigen unterschiedlichen Bauteilen verschiedene Anschlussstücke konfiguriert werden. Beispielsweise können die Dichtungsabschnitte unterschiedlich ausgestaltete Anlagekragen aufweisen, die an die Außendurchmesser unterschiedlich großer Kanalrohre angepasst sind, während der Verbindungsabschnitt stets gleich ausgestaltet sein kann. Es können jedoch auch unterschiedliche Verbindungsabschnitte vorgesehen sein, beispielsweise starre Verbindungsabschnitte oder bewegliche, die nämlich die als Kugeladapter ausgestaltete Muffe aufweisen. Durch die zweiteilige Ausgestaltung des Rohrstutzens können diese unterschiedlichen Varianten der Dichtungsabschnitte und / oder der Verbindungsabschnitte beliebig miteinander kombiniert werden.

Bei einer solch zweiteiligen Ausgestaltung des Rohrstutzens kann vorteilhaft der Anlagekragen an dem Teil des Rohrstutzens angeordnet sein, der den Dichtungsabschnitt bildet. Auf diese Weise wird eine optimale Dichtigkeit gewährleistet, da der Dichtungsabschnitt einschließlich des Anlagekragens fugenlos einteilig hergestellt ist, sodass der unerwünschte Austritt von Dichtungsmasse ab der Füllkammer zuverlässig verhindert werden kann.

Der Dichtungsabschnitt, der in die Bohrung des Kanalrohrs eingebracht wird, kann typischerweise einen Durchmesser von etwa 200 mm aufweisen, sodass die typischen Hausanschlussleitungen ohne Querschnittsverringerung bis in das Kanalrohr geführt werden können. Insbesondere für den Anschluss an Kanalrohre mit vergleichsweise geringen Durchmessern kann allerdings vorteilhaft sein, den Durchmesser des Dichtungsabschnitts möglichst gering zu halten. Dementsprechend ist es ausreichend, eine Bohrung mit entsprechend kleinem Durchmesser in das Kanalrohr einzubringen, um den Dichtungsabschnitt des Anschlussstücks in eine solche Bohrung einbringen zu können. Durch den möglichst reduzierten Bohrungsdurchmesser wird das Kanalrohr entsprechend weniger geschwächt, was sich insbesondere bei Kanalrohren mit kleinen Durchmessern vorteilhaft auswirken kann. Dementsprechend kann der Dichtungsabschnitt einen Durchmesser aufweisen, der im Bereich von 170 bis 175 mm liegt.

Ausführungsbeispiele der Erfindung werden anhand der rein schematischen Darstellungen nachfolgend näher erläutert. Dabei zeigt
- Fig. 1: eine perspektivische Ansicht auf ein erstes Ausführungsbeispiel eines Anschlussstücks,
- Fig. 2: eine perspektivische Ansicht von oben und in den Verbindungsabschnitt des Anschlussstücks von Fig. 1, und
- Fig. 3: eine Ansicht auf ein zweites Ausführungsbeispiel eines Anschlussstücks in auseinandergezogener Darstellung.

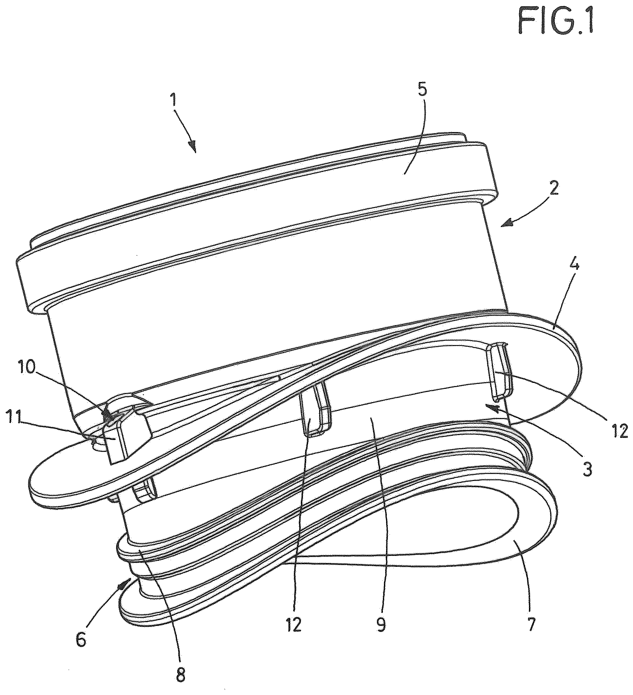

In Fig. 1 ist ein Anschlussstück 1 dargestellt, welches einen Verbindungsabschnitt 2 und einen Dichtungsabschnitt 3 aufweist, wobei diese beiden Abschnitte voneinander durch einen Anlagekragen 4 getrennt sind.

Der Verbindungsabschnitt 2 weist im Inneren eine umlaufende Sicke 5 auf, die außen als dementsprechend umlaufender Vorsprung erkennbar ist.

Der Dichtungsabschnitt 3 weist eine umlaufende Dichtungskammer 6 auf, in die ein elastomerer Dichtungsring eingelegt werden kann. Die Dichtungskammer 6 ist am unteren Ende des Anschlussstücks 1 durch einen Abschlusskragen 7 begrenzt und in Richtung zum Anlagekragen 4 hin durch einen Haltekragen 8, sodass der elastomere Dichtungsring sicher zwischen dem Abschlusskragen 7 und dem Haltekragen 8 in der Dichtungskammer 6 festgelegt ist.

Zwischen der Dichtungskammer 6 und dem Anlagekragen 4 weist der Dichtungsabschnitt 3 eine Füllkammer 9 auf, die zur Aufnahme einer fließfähigen Dichtungsmasse dient. Die Dichtungsmasse wird durch einen Füllkanal in die Füllkammer 9 eingebracht, wobei dieser Füllkanal unterhalb des Anlagekragens 4 in der Füllkammer 9 mündet. Eine zweite Mündung 10 des Füllkanals ist außerhalb des Anlagekragens 4 vorgesehen und befindet sich in einem in Fig. 1 ersichtlichen Sockel 11.

Innerhalb der Füllkammer 9 sind um den Umfang des rohrstutzenartigen Anschlussstücks 1 mehrere Zentrier-Rippen 12 angeordnet.

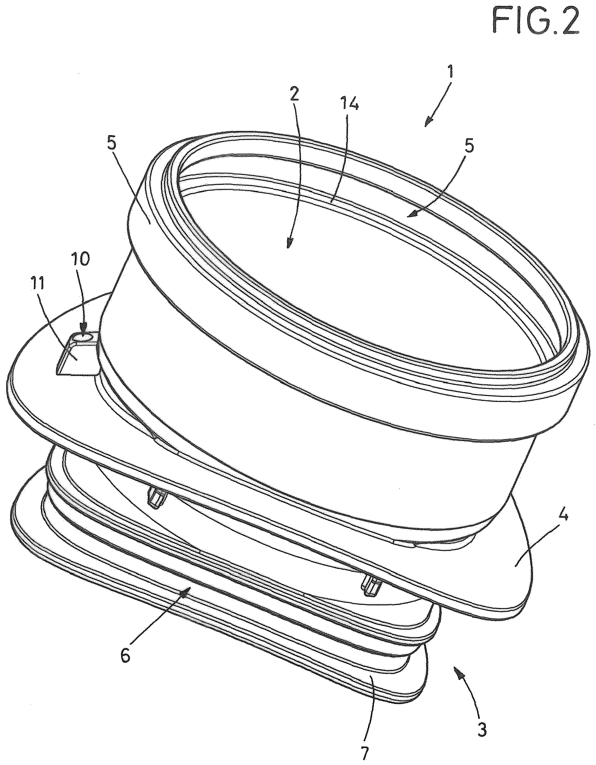

Fig. 2 zeigt beim Blick von oben in das Innere des Anschlussstücks 1 eine Innendichtung 14, die als Elastomerdichtung ausgestaltet ist und als sogenannte FE-Dichtung einen formstabilen Stützabschnitt aufweist, der dafür Sorge trägt, dass die Innendichtung 14 in der Sicke 5 sicher gehalten ist.

Der Verbindungsabschnitt 2 des Anschlussstücks 1 ist als Muffe ausgestaltet, in welcher das Spitzende eines Rohrs, typischerweise eines Kunststoffrohrs, eingeschoben werden kann.

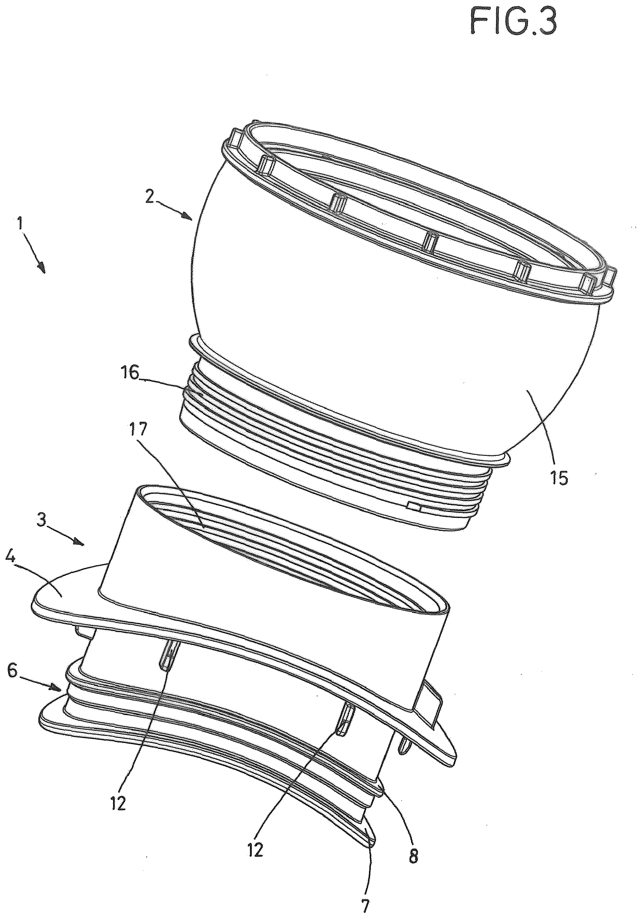

Während Fig. 1 und 2 ein Anschlussstück 1 zeigen, welches einen starren und einstückigen Rohrstutzen aufweist, zeigt Fig. 3 ein zweites Ausführungsbeispiel, bei dem das Anschlussstück 1 einen Rohrstutzen aufweist, der aus zwei separaten Teilen aufgebaut ist. Der Verbindungsabschnitt 2 ist dabei als sogenannter Kugeladapter 15 ausgestaltet. Zudem weist der Verbindungsabschnitt 2 ein Außengewinde 16 auf, welches mit einem entsprechenden Innengewinde 17 des separaten Dichtungsabschnitts 3 zusammenwirkt. Der Dichtungsabschnitt 3 erstreckt sich für die Ausgestaltung dieses Innengewindes 17 über den Anlagekragen 4 hinaus und ist ansonsten ausgestaltet wie der Dichtungsabschnitt 3 des Ausführungsbeispiels der Fig. 1 und 2.

### Bezugszeichen:

- 1: Anschlussstück
- 2: Verbindungsabschnitt
- 3: Dichtungsabschnitt
- 4: Anlagekragen
- 5: Sicke
- 6: Dichtungskammer
- 7: Abschlusskragen
- 8: Haltekragen
- 9: Füllkammer
- 10: Zweite Mündung
- 11: Sockel
- 12: Zentrier-Rippe
- 14: Innendichtung
- 15: Kugeladapter
- 16: Außengewinde
- 17: Innengewinde

## Patentansprüche

1. Als Rohrstutzen ausgestaltetes Anschlussstück (1) zum seitlichen Anschluss eines Kunststoffrohrs an ein mineralisches Kanalrohr,
mit einem Dichtungsabschnitt (3), der eine zirkumferent umlaufende Dichtungskammer (6) zur Aufnahme einer als Dichtungsring ausgestalteten Elastomerdichtung aufweist, und mit einem die Endringtiefe des Dichtungsabschnitts (3) in eine Bohrung des Kanalrohrs begrenzenden Anlagekragen (4),
und mit einem Verbindungsabschnitt (2) zur Verbindung mit dem Kunststoffrohr,
wobei der Dichtungsabschnitt (3) zwischen der Dichtungskammer (6) und dem Anlagekragen (4) eine Füllkammer (9) aufweist, die dazu bestimmt ist, eine fließfähige Dichtungsmasse aufzunehmen,
wobei ein Füllkanal einenendes in der Füllkammer (9) mündet und anderenendes jenseits des Anlagekragens (4) an der Außenseite des Anschlussstücks (1) eine zweite Mündung (10) aufweist,
**dadurch gekennzeichnet,**
**dass** in der Füllkammer (9) zwei Federelemente angeordnet sind,
die widerhakenartig in der Art ausgerichtet sind, dass sie beim Einführen des Dichtungsabschnitts (3) in eine Bohrung des Kanalrohrs komprimiert werden und bei einer anschließenden Bewegung in Gegenrichtung gespreizt werden und eine weitere Bewegung in dieser Gegenrichtung erschweren.

2. Anschlussstück nach Anspruch 1,
**dadurch gekennzeichnet,**
**dass** in der Füllkammer (9) Zentrier-Rippen (12) am Umfang des Dichtungsabschnitts (3) verteilt angeordnet sind.

3. Anschlussstück nach Anspruch 1 oder 2,
**dadurch gekennzeichnet,**
**dass** auf der zum Dichtungsabschnitt (3) ausgerichteten Seite des Anlagekragens (4) eine Weichdichtung angeordnet ist.

4. Anschlussstück nach Anspruch 3,
**dadurch gekennzeichnet,**
**dass** die Weichdichtung als Moosgummidichtung ausgestaltet ist.

5. Anschlussstück nach einem der vorhergehenden Ansprüche,
**dadurch gekennzeichnet,**
**dass** der Verbindungsabschnitt (2) eine Muffe zum Anschluss des Spitzendes eines Kunststoffrohrs aufweist.

6. Anschlussstück nach Anspruch 5,
**dadurch gekennzeichnet,**
**dass** die Muffe als so genannter Kugeladapter (15) ausgestaltet ist,
mit einem äußeren Gehäuse, welches eine kugelausschnittsförmige Innenkontur aufweist,
und mit einem inneren Muffeneinsatz, der mittels einer umlaufenden Dichtung gegen die Innenkontur abgedichtet ist und innerhalb der Innenkontur frei beweglich angeordnet ist, derart, dass Muffeneinsatz in beliebigen Richtungen beweglich ist.

7. Anschlussstück nach einem der vorhergehenden Ansprüche,
**dadurch gekennzeichnet,**
**dass** der Rohrstutzen zweiteilig ausgestaltet ist,
wobei ein erster Teil den Dichtungsabschnitt (3) und ein zweiter Teil den Verbindungsabschnitt (2) aufweist.

8. Anschlussstück nach Anspruch 7,
**dadurch gekennzeichnet,**
**dass** der den Dichtungsabschnitt (3) aufweisende erste Teil auch den Anlagekragen (4) aufweist.

9. Anschlussstück nach einem der vorhergehenden Ansprüche,
**dadurch gekennzeichnet,**
**dass** der Dichtungsabschnitt (3) einen Durchmesser von höchstens 175 mm aufweist.

## Claims

1. Connector which is designed as a pipe socket (1) for lateral connection of a plastic pipe to a mineral channel pipe and has a sealing section (3) that incorporates a sealing chamber (6) that extends all the way around the connector to receive an elastomer seal that is designed as a sealing ring, and has a contact collar (4) that limits how far the sealing section (3) can extend into a hole made in the channel pipe and has a joining section (2) for joining to the plastic pipe, wherein the sealing section (3) incorporates a filling chamber (9) that is arranged between the sealing chamber (6) and the contact collar (4) and is designed to receive a flowable sealing medium, wherein a filling channel at one end leads into the filling chamber (9) and incorporates at the other end a second outlet (10) on the other side of the contact collar (4) on the outside of the connector (1), **characterised in that** two spring elements are arranged in the filling chamber (9), which spring elements are aligned like barbs so that, when the sealing section (3) is inserted into a drilled hole in the channel pipe, these spring elements are compressed and, when a movement is then made in the opposite direction, are decompressed and impede further movement in this opposite direction.

2. Connector in accordance with claim 1, **characterised in that** in the filling chamber (9) centring ribs (12) are arranged around the circumference of the sealing section (3).

3. Connector in accordance with claim 1 or 2, **characterised in that** a soft seal is arranged on the side of the contact collar (4) that is oriented towards the sealing section (3).

4. Connector in accordance with claim 3, **characterised in that** the soft seal is designed as a foam rubber seal.

5. Connector in accordance with any one of the preceding claims, **characterised in that** the joining section (2) incorporates a sleeve for connecting the spigot end of a plastic pipe.

6. Connector in accordance with claim 5, **characterised in that** the sleeve is designed as a so-called ball adapter (15), and has an outer housing that incorporates a concave inner contour and has an inner sleeve insert that is sealed off from the inner contour by means of a seal that extends all the way around it and is freely movably arranged inside the inner contour in such a way that the sleeve insert can be moved in any required direction.

7. Connector in accordance with any one of the preceding claims, **characterised in that** the pipe socket is designed in two parts, where a first part incorporates the sealing section (3) and a second part incorporates the joining section (2).

8. Connector in accordance with claim 7, **characterised in that** the first part that incorporates the sealing section (3) also incorporates the contact collar (4).

9. Connector in accordance with any one of the preceding claims, **characterised in that** the sealing section (3) has a cross section measuring not more than 175 mm.

## Revendications

1. Pièce de raccordement (1) conçue sous forme de tubulure pour le raccordement latéral d'un tube en matière plastique à une canalisation minérale, avec une section d'étanchéité (3) qui présente un compartiment d'étanchéité (6) circonférentiel pour la réception d'un joint en élastomère conçu sous forme de bague d'étanchéité, avec un collet d'appui (4) qui limite la profondeur de pénétration de la section d'étanchéité (3) dans un orifice de la canalisation et avec une section de raccordement (2) pour le raccordement au tube en matière plastique, sachant que la section d'étanchéité (3) entre le compartiment d'étanchéité (6) et le collet d'appui (4) présente une chambre de remplissage (9) destinée à recevoir une masse d'étanchéité fluide, sachant qu'un canal de remplissage débouche à une extrémité dans la chambre de remplissage (9) et présente à l'autre extrémité une deuxième ouverture (10) sur la face extérieure de la pièce de raccordement (1) au-delà du collet d'appui (4), **caractérisée en ce que** deux éléments à ressort qui sont orientés comme des contre-crochets de manière à être comprimés lors de l'introduction de la section d'étanchéité (3) dans un orifice de la canalisation et écartés lors du mouvement qui suit en sens inverse et rendent difficile tout autre mouvement dans ce sens inverse sont disposés dans la chambre de remplissage (9).

2. Pièce de raccordement selon la revendication 1 **caractérisée en ce que** dans la chambre de remplissage (9) des nervures de centrage (12) sont réparties sur la circonférence de la section d'étanchéité (3).

3. Pièce de raccordement selon la revendication 1 ou 2, **caractérisée en ce qu'**une garniture souple d'étanchéité est disposée sur la face du collet d'appui (4) orientée vers la section d'étanchéité (3).

4. Pièce de raccordement selon la revendication 3 **caractérisée en ce que** la garniture souple d'étanchéité est conçue sous forme de joint en caoutchouc mousse.

5. Pièce de raccordement selon l'une des revendications précédentes, **caractérisée en ce que** la section de raccordement (2) présente un manchon pour le raccordement de l'extrémité mâle d'un tube en matière plastique.

6. Pièce de raccordement selon la revendication 5 **caractérisée en ce que** le manchon est conçu sous forme d'un dit adaptateur à rotule (15), avec un boîtier extérieur qui présente un contour intérieur en forme d'évidement sphérique et avec un insert de manchon intérieur qui est rendu étanche par rapport au contour intérieur à l'aide d'un joint circonférentiel et disposé dans le contour intérieur avec une liberté de mouvement, de telle manière que l'insert de manchon peut être déplacé dans n'importe quelle direction.

7. Pièce de raccordement selon l'une des revendications précédentes, **caractérisée en ce que** la tubulure est conçue en deux parties, sachant qu'une première partie présente la section d'étanchéité (3) et une deuxième partie la section de raccordement (2).

8. Pièce de raccordement selon la revendication 7 **caractérisée en ce que** la première partie qui présente la section d'étanchéité (3) présente également le collet d'appui (4).

9. Pièce de raccordement selon l'une des revendications précédentes, **caractérisée en ce que** la section d'étanchéité (3) présente un diamètre maximal de 175 mm.
